# EUROPEAN PATENT APPLICATION

(11) **EP 4 418 163 A1**
(43) Date of publication of application: **21.08.2024**
(21) Application number: 21964345.9
(22) Date of filing: 17.11.2021

(54) **INFORMATION INTERACTION METHOD AND DEVICE AND SYSTEM**

(71) Applicant: Huawei Technologies Co., Ltd., Shenzhen, Guangdong 518129 (CN)
(72) Inventor: GAN, Guodong, Shenzhen, Guangdong 518129 (CN); MA, Sha, Shenzhen, Guangdong 518129 (CN)
(74) Representative: Pfenning, Meinig & Partner mbB
(86) International application number: PCT/CN2021/131251
(87) International publication number: WO 2023/087182

(57) **Abstract**

This application discloses an information exchange method, apparatus, and system. The method includes: receiving at least one piece of test data, where the at least one piece of test data includes gesture information, the gesture information includes a first parameter, the first parameter indicates a first gesture, and the first parameter belongs to a predefined gesture parameter set; and outputting a first control signal based on the at least one piece of test data, where the first control signal is used to control a first virtual terminal. In this way, a capability of an autonomous driving system to identify and respond to a traffic police officer gesture can be tested, and safety and intelligence of autonomous driving can be improved.

## Description

### TECHNICAL FIELD

This application relates to the field of intelligent vehicles, and in particular, to an information exchange method, apparatus, and system.

### BACKGROUND

In recent years, autonomous driving has become an important development direction in the field of research and development of vehicles. To improve intelligence of autonomous driving of a vehicle, a capability of an autonomous driving system of the vehicle needs to be verified under various working conditions. During a process of testing the autonomous driving system, various environmental conditions and traffic conditions such as pedestrians, traffic vehicles, signal lights, and road infrastructure should be fully considered.

Currently, in scenarios such as traffic light faults, traffic accident handling, and temporary traffic arrangements, traffic police officers coordinate and command traffic. Therefore, identifying and responding to a traffic police officer gesture is important for the autonomous driving of the vehicle. However, currently, research on identifying and responding to the traffic police officer gesture by the autonomous driving system is of a small quantity, and a solution that may be applied for testing a capability of the autonomous driving system to identify and respond to the traffic police officer gesture is urgently needed.

### SUMMARY

Embodiments of this application provide an information exchange method, apparatus, and system, to test a capability of an autonomous driving system to identify and respond to a traffic police officer gesture, so as to improve safety and intelligence of autonomous driving.

According to a first aspect, an information exchange method is provided. The method may be applied to a first apparatus. The first apparatus may be any apparatus having an autonomous driving function or an assistant driving function, for example, an autonomous driving system (supporting the autonomous driving function or an assistant driving function) or an apparatus or a device that carries an autonomous driving system. The method includes: receiving at least one piece of test data, where the at least one piece of test data includes gesture information, the gesture information includes a first parameter, the first parameter indicates a first gesture, and the first parameter belongs to a predefined gesture parameter set; and outputting a first control signal based on the at least one piece of test data, where the first control signal is used to control a first virtual terminal.

In the foregoing solution, the autonomous driving system may receive the at least one piece of test data, and output the first control signal based on the at least one piece of test data, so as to test a capability of the autonomous driving system to identify and respond to a gesture, thereby improving safety and intelligence of autonomous driving of a vehicle.

In a possible design, the gesture parameter set includes a plurality of parameters, and the plurality of parameters indicate any plurality of the following gestures: a stop gesture, a straight ahead gesture, a left turn gesture, a wait for left turn gesture, a right turn gesture, a wait for right turn gesture, a lane change gesture, a slow down gesture, a pull over gesture, or an unknown gesture.

It should be understood that the foregoing several types are merely examples but not specific limitations.

In a possible design, the first parameter is an RGB value, and the RGB value represents an image corresponding to the first gesture. In other words, the test data may be in an image format.

In this way, an effect of identifying and responding to the first gesture by the autonomous driving system based on an image technology may be simulated.

In a possible design, the first parameter is a true value, and the true value indicates the first gesture. For example, the first parameter is a true value agreed on in an OSI standard.

In this way, an effect of identifying and responding to the first gesture by the autonomous driving system based on the true value may be simulated.

In a possible design, the gesture information further includes a second parameter, where the second parameter indicates information about a lane in which the first virtual terminal is located.

In this way, the information about the lane in which the first virtual terminal is located may be provided as a part of the gesture information for the autonomous driving system, so that the autonomous driving system may identify and respond to the first gesture with reference to the information about the lane in which the first virtual terminal is located, thereby improving reliability of the solution.

In a possible design, the gesture information further includes a third parameter, and the third parameter indicates whether the first parameter is valid.

In this way, whether to test the capability of the autonomous driving system to identify and respond to a gesture may be flexibly determined based on a requirement, so that computing resources of the autonomous driving system may be saved.

In a possible design, the at least one piece of test data further includes one or more pieces of the following information:
subject identification information of the first gesture;
subject location information of the first gesture;
subject reference information of the first gesture; or
subject drive information of the first gesture.

In this way, information related to an execution subject corresponding to the first gesture may be provided to the autonomous driving system, to further improve the reliability of the test solution.

In a possible design, the at least one piece of test data may further include traffic signal light information.

In this way, a capability of the autonomous driving system to process contradiction information (for example, a contradiction between the gesture information and the traffic signal light information) may be tested, to improve robustness of the autonomous driving system.

In a possible design, the at least one piece of test data further includes obstruction information.

In this way, a capability of the autonomous driving system to process interference information may be tested, to improve the robustness of the autonomous driving system.

In a possible design, the at least one piece of test data further includes perception data from a second virtual terminal, the perception data includes reference gesture information, and the reference gesture information indicates the first gesture.

In this way, a capability of the autonomous driving system to identify a gesture based on a V2X communication function may be tested.

In a possible design, the at least one piece of test data includes the gesture information and the traffic signal light information. Correspondingly, the outputting a first control signal based on the at least one piece of test data may include: outputting the first control signal based on information with a higher priority in the traffic signal light information and the gesture information.

In this way, when receiving the traffic signal light information and the gesture information at the same time, the autonomous driving system may output the first control signal based on the information with a higher priority, so that robustness of the autonomous driving system may be improved.

According to a second aspect, an information exchange method is provided. The method may be applied to a second apparatus, and the second apparatus may be any apparatus having a simulation function, for example, a simulation system. The method includes: outputting at least one piece of test data to a first apparatus, where the at least one piece of test data includes gesture information, the gesture information includes a first parameter, the first parameter indicates a first gesture, and the first parameter belongs to a predefined gesture parameter set; receiving a first control signal from the first apparatus; and controlling a first virtual terminal based on the first control signal.

In a possible design, the gesture parameter set includes a plurality of parameters, and the plurality of parameters indicate any plurality of the following gestures: a stop gesture, a straight ahead gesture, a left turn gesture, a wait for left turn gesture, a right turn gesture, a wait for right turn gesture, a lane change gesture, a slow down gesture, a pull over gesture, or an unknown gesture.

In a possible design, the first parameter is an RGB value, and the RGB value represents an image corresponding to the first gesture; or the first parameter is a true value, and the true value indicates the first gesture.

In a possible design, the gesture information further includes a second parameter, where the second parameter indicates information about a lane in which a first virtual terminal is located; and/or a third parameter, where the third parameter indicates whether the first parameter is valid.

In a possible design, the at least one piece of test data further includes one or more pieces of the following information:
subject identification information of the first gesture;
subject location information of the first gesture;
subject reference information of the first gesture; or
subject drive information of the first gesture.

In a possible design, the at least one piece of test data further includes at least one piece of the following information: traffic signal light information or obstruction information.

In a possible design, the at least one piece of test data further includes perception data from a second virtual terminal, the perception data includes reference gesture information, and the reference gesture information indicates the first gesture.

For technical effects of the designs in the second aspect, refer to the technical effects of the corresponding designs in the first aspect. Details are not described herein again.

In a possible design, when a first event is detected, a virtual subject is controlled to execute the first gesture. For example, the first event may include one or more of the following: an event in which a distance between the virtual subject and the first virtual terminal is less than a preset distance, traffic congestion, or a traffic accident. It should be understood that the foregoing several types are merely examples but not limitations.

In this design, driving the virtual subject to execute the gesture based on the event is close to a manner in which a gesture is triggered in a real scenario, which may improve test reli ability.

In a possible design, the virtual subject may be controlled, based on road collection data, to execute a gesture that is the same as a gesture in the road collection data, where the road collection data indicates that a real subject executes the first gesture in a real road scenario.

In this design, driving the virtual subject to execute a same gesture as a real gesture is close to a gesture change rule in a real scenario, which may improve the test reliability.

In a possible design, the virtual subject is controlled to execute a specified gesture at specified time, where the specified gesture includes the first gesture.

In this design, driving the virtual subject to execute the gesture according to a preset rule may reduce complexity of the solution.

According to a third aspect, an information exchange apparatus is provided, including a module/unit/technical means configured to perform the method according to any one of the first aspect or the possible designs of the first aspect.

For example, the apparatus includes a transceiver module and a processing module. The transceiver module is configured to receive at least one piece of test data, where the at least one piece of test data includes gesture information, the gesture information includes a first parameter, the first parameter indicates a first gesture, and the first parameter belongs to a predefined gesture parameter set. The processing module is configured to generate a first control signal based on the at least one piece of test data, where the first control signal is used to control a first virtual terminal. The transceiver module is further configured to output the first control signal.

According to a fourth aspect, an information exchange apparatus is provided, including a module/unit/technical means configured to perform the method according to any one of the second aspect or the possible designs of the second aspect.

For example, the apparatus includes a transceiver module and a processing module. The transceiver module is configured to output at least one piece of test data to a first apparatus, where the at least one piece of test data includes gesture information, the gesture information includes a first parameter, the first parameter indicates a first gesture, and the first parameter belongs to a predefined gesture parameter set. The transceiver module is further configured to receive a first control signal from the first apparatus. The processing module is configured to control a first virtual terminal based on the first control signal.

According to a fifth aspect, an information exchange apparatus is provided. The information exchange apparatus includes a processor and an interface circuit. The interface circuit is configured to receive a signal from another apparatus other than the apparatus and transmit the signal to the processor, or send a signal from the processor to another communication apparatus other than the apparatus, and the processor is configured to implement the method according to first aspect or any one of possible designs of the first aspect by using a logic circuit or executing code instructions.

According to a sixth aspect, an information exchange apparatus is provided. The information exchange apparatus includes a processor and an interface circuit, the interface circuit is configured to receive a signal from another apparatus other than the apparatus and transmit the signal to the processor, or send a signal from the processor to another communication apparatus other than the apparatus, and the processor is configured to implement the method according to the second aspect or any one of the possible designs of the second aspect by using a logic circuit or executing code instructions.

According to a seventh aspect, an information exchange system is provided, including the apparatus according to the third aspect and the apparatus according to the fourth aspect, or including the apparatus according to the fifth aspect and the apparatus according to the sixth aspect.

According to an eighth aspect, a computer-readable storage medium is provided, including a program or instructions. When the program or the instructions are run on a computer, the method according to the first aspect, any one of the possible designs of the first aspect, the second aspect, or any one of the possible designs of the second aspect is enabled to be performed.

According to a ninth aspect, a computer program product including instructions is provided. The computer program product stores the instructions. When the instructions are run on a computer, the computer is enabled to perform the method according to the first aspect or any one of the possible designs of the first aspect, or the method according to the second aspect or any one of the possible designs of the second aspect.

According to a tenth aspect, a vehicle is provided. The vehicle includes the apparatus according to the third aspect, the apparatus according to the fifth aspect, or the computer-readable storage medium according to the eighth aspect.

### BRIEF DESCRIPTION OF DRAWINGS

FIG. 1 is a schematic diagram of an architecture of an information exchange system according to an embodiment of this application;
FIG. 2 is a schematic diagram of a possible virtual traffic scenario according to an embodiment of this application;
FIG. 3 is a flowchart of an information exchange method according to an embodiment of this application;
FIG. 4 is a schematic diagram of possible test data according to an embodiment of this application;
FIG. 5 is a schematic diagram of a virtual subject image in views of different virtual terminals according to an embodiment of this application;
FIG. 6 is a schematic diagram of a structure of an information exchange apparatus according to an embodiment of this application; and
FIG. 7 is a schematic diagram of a structure of another information exchange apparatus according to an embodiment of this application.

### DESCRIPTION OF EMBODIMENTS

The following describes in detail embodiments of this application with reference to accompanying drawings.

Embodiments of this application may be used in any scenario in which a capability of a driving system may be tested.

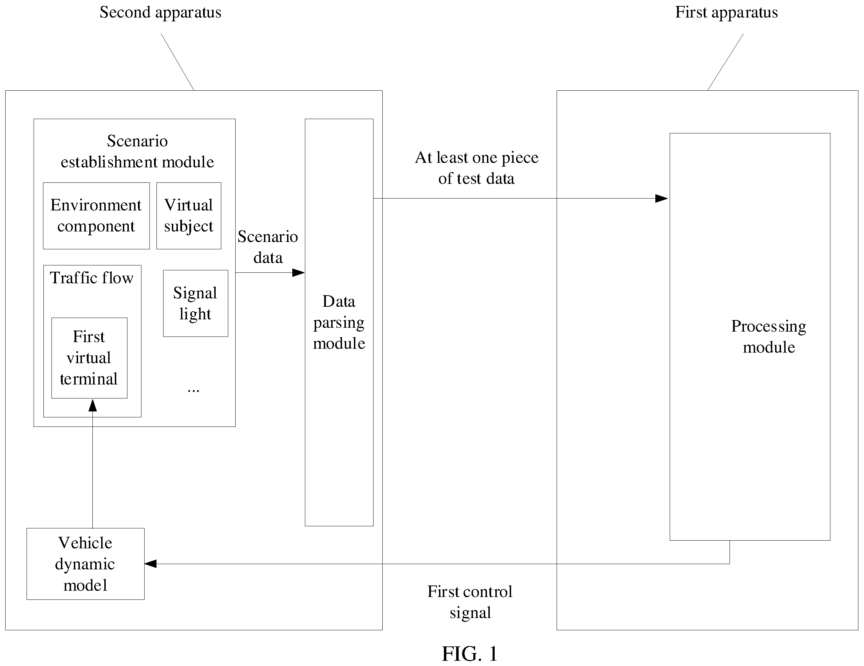

For example, FIG. 1 is a schematic diagram of an architecture of an information exchange system to which an embodiment of this application is applicable. The system includes a second apparatus and a first apparatus. The second apparatus is configured to generate at least one piece of test data, and output the at least one piece of test data to the first apparatus. The first apparatus is an object to be tested (or the object to be tested is deployed in the first apparatus). The first apparatus is configured to receive the at least one piece of test data, process the at least one piece of test data, generate a test result (for example, a first control signal), and output the test result to the second apparatus.

In a possible design, the first apparatus may be an autonomous driving system, or any apparatus integrated with an autonomous driving system. A specific form of the apparatus may be a chip (for example, a controller, a processor, or an integrated circuit), a terminal (for example, an in-vehicle terminal), or the like. This is not limited in this application.

For example, the autonomous driving system in this embodiment of this application includes but is not limited to the following systems.
(1) Emergency assistance (emergency assistance) system: The emergency assistance system may not continuously perform horizontal or vertical motion control of a vehicle in a dynamic driving task, but has a capability to continuously detect and respond to some targets and events in the dynamic driving task.
(2) Partial driver assistance (partial driver assistance) system: The partial driver assistance system continuously performs horizontal or vertical motion control of a vehicle in a dynamic driving task under an operating condition designed by the partial driver assistance system, and has a capability to detect and respond to some targets and events that are corresponding to the horizontal or vertical motion control of the vehicle.
(3) Combined driver assistance (combined driver assistance) system: The combined driver assistance system continuously performs horizontal and vertical motion control of a vehicle in a dynamic driving task under an operating condition designed by the combined driver assistance system, and has a capability to detect and respond to some targets and events that are corresponding to the horizontal and vertical motion control of the vehicle.
(4) Conditionally automated driving (conditionally automated driving) system: The conditionally automated driving system continuously executes all dynamic driving tasks under an operating condition designed by the conditionally automated driving system.
(5) Highly automated driving (highly automated driving) system: The highly automated driving system continuously executes all dynamic driving tasks and automatically executes a minimum risk policy under an operating condition designed by the highly automated driving system.
(6) Fully automated driving (fully automated driving) system: The fully automated driving system continuously executes all dynamic driving tasks under any driving condition and automatically executes a minimum risk policy.

It should be understood that the foregoing several types are merely examples but not specific limitations. The autonomous driving system in embodiments of this application is not limited to a country or a level. Any system having an assistant driving function or an autonomous driving function falls within the protection scope of the autonomous driving system in this application.

In a possible design, the second apparatus may be a simulation system or any apparatus (such as a chip or a terminal) integrated with a simulation system. The second apparatus is configured to generate test data related to a traffic scenario. The test data related to the traffic scenario is used to test a capability of a driving system to identify the traffic scenario, a capability to respond to the traffic scenario, or the like.

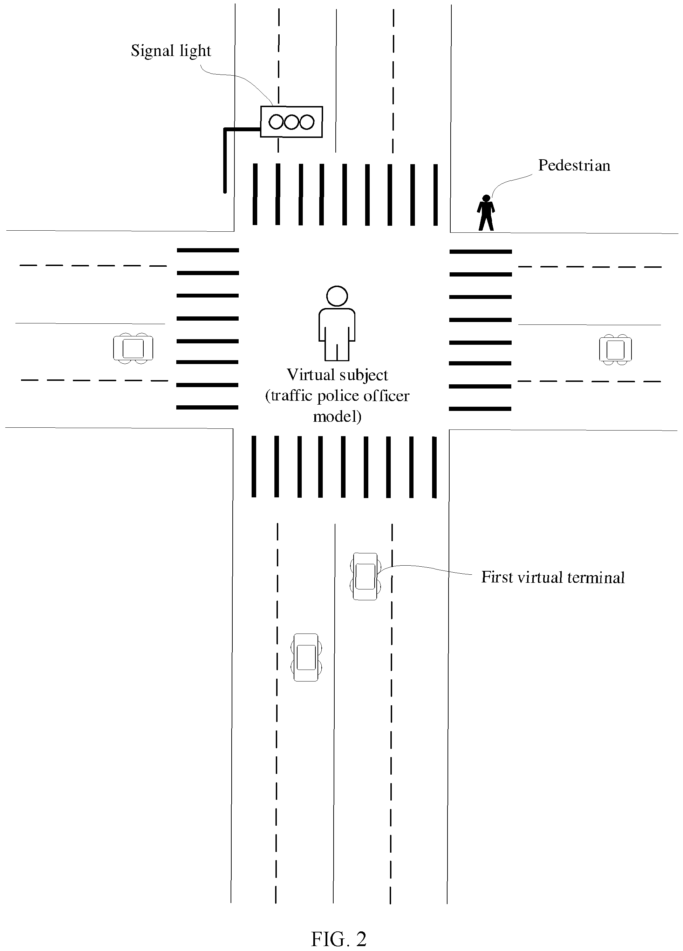

In a possible design, refer to FIG. 1. The second apparatus includes at least the following three functional modules.
(1) A scenario establishment module is configured to establish a virtual traffic scenario, for example, establish an environment component (such as a road or a building), a traffic flow (such as a vehicle or a pedestrian), a signal light (such as a traffic light or a turning light), or a virtual subject (such as a traffic police officer model). The traffic flow includes at least one virtual terminal, for example, a first virtual terminal. FIG. 2 is a schematic diagram of a possible virtual traffic scenario according to an embodiment of this application.
(2) A data parsing module is configured to obtain scenario data generated by the scenario establishment module, and parse the scenario data to obtain test data that meets a preset standard.

It may be understood that the test data that meets the preset standard may be identified and processed by the first apparatus.

It may be understood that the preset standard is not specifically limited in this application. For example, the preset standard may be an open simulation interface (Open Simulation Interface, OSI) standard formulated by the Association for Standardization of Automation and Measuring Systems (Association for Standardization of Automation and Measuring Systems, ASAM). The OSI standard defines a universal interface for connecting development of an autonomous driving function and various driving simulation frameworks to implement compatibility. It enables any autonomous driving function to connect to any simulation tool, and may integrate various sensor models.

(3) A vehicle dynamic model is configured to control the first virtual terminal in the virtual traffic scenario based on a control signal sent by the first apparatus. For example, the vehicle dynamics model is used to obtain a dynamic response value of the first virtual terminal for the virtual traffic scenario based on the first control signal sent by the first apparatus and current pose information of the first virtual terminal, so as to update the pose information of the first virtual terminal based on the vehicle dynamics model, and implement an effect of controlling, by the autonomous driving system, autonomous driving of the first virtual terminal.

In a possible design, refer to FIG. 1. The first apparatus includes at least a processing module. The processing module performs calculation on the at least one piece of test data, and outputs the first control signal used to control the first virtual terminal, to simulate an effect of identifying, by the autonomous driving system, an event that occurs in a scenario and controlling the vehicle to respond to the event. For example, the processing module may run instructions or data corresponding to an autonomous driving algorithm, so as to perform calculation on the at least one piece of test data and output the first control signal.

It should be understood that the first apparatus and the second apparatus may be deployed in a same physical entity, or may be deployed in different physical entities. This is not limited in this application.

It should be understood that the system architecture shown in FIG. 1 is merely an example rather than a specific limitation. In actual application, there may be other variations.

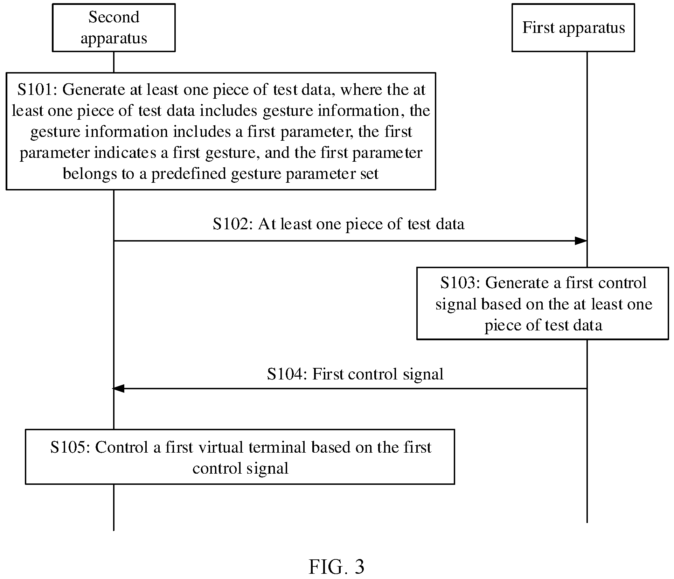

FIG. 3 is a flowchart of an information exchange method according to an embodiment of this application. An example in which the method is applied to the system shown in FIG. 1 is used. The method includes the following steps.

S101: A second apparatus generates at least one piece of test data.

The second apparatus first establishes a virtual traffic scenario. For example, a scenario establishment module in the second apparatus may invoke data in a scenario database to establish the virtual traffic scenario. The scenario database may provide a large quantity of typical scenarios and meet test requirements. The data in the scenario database may include static scenario data and dynamic scenario data. The static scenario data is used to describe a static component in a traffic scenario, for example, an environment component (such as a road). The dynamic scenario data is used to describe a dynamic component in a traffic scenario, for example, a mobile traffic flow (such as a vehicle or a pedestrian), a changeable signal light (such as a traffic light or a turn light), or a virtual subject that may make a gesture (Gesture). The scenario database may be stored in the second apparatus, or may be stored in another apparatus other than the second apparatus. This is not limited in this application.

The established virtual traffic scenario may be a three-dimensional virtual traffic scenario model, and the virtual traffic scenario model includes a three-dimensional model of the static component and a three-dimensional model of the dynamic component. FIG. 2 is a schematic diagram of the virtual traffic scenario, including roads, vehicles, a pedestrian, a traffic police officer, a traffic light, and the like.

It may be understood that the virtual traffic scenario in this embodiment of this application includes at least a first virtual terminal and a virtual subject. The first virtual terminal is a virtual model of a terminal carrying a tested object (for example, an autonomous driving system), for example, a virtual model of an autonomous driving vehicle. The virtual subject may simulate a real person to make a real person gesture. For example, the virtual subject may be a virtual traffic police officer model, and may make a traffic police officer gesture; or the virtual subject may be a virtual traffic assistant model, and may make a traffic assistant gesture. As shown in FIG. 2, an example in which the virtual subject is the virtual traffic police officer model and the first virtual terminal is a vehicle is used.

After the virtual traffic scenario is established, the scenario establishment module may control (or drive) the virtual subject to execute a first gesture.

In a possible design, the scenario establishment module may control (or drive) the virtual subject to execute a gesture based on an event, and different events may correspond to a same gesture or different gestures. The event includes but is not limited to an event in which a distance between the virtual subject and the first virtual terminal is less than a preset distance, traffic congestion, a traffic accident, or the like. For example, when the distance between the virtual subject and the first virtual terminal is less than the preset distance, the subject is controlled to execute a slow-down gesture. For example, when the traffic accident occurs in the virtual traffic scenario, the virtual subject is controlled to execute a pull over gesture. For example, when the traffic congestion occurs in the virtual traffic scenario, the scenario establishment module controls the virtual subject to execute a lane change gesture. Correspondingly, when or after a first event occurs, the scenario establishment module controls the virtual subject to execute the first gesture. Driving the virtual subject to execute the gesture based on the event is close to a manner in which a gesture is triggered in a real scenario, which may improve test reliability.

In a possible design, the scenario establishment module may control (or drive), based on road collection data, the virtual subject to execute a gesture that is the same as a gesture in the road collection data, where the road collection data indicates a gesture executed by a real subject in a real road scenario. For example, the road collection data is a video image, and duration of the video image is 3 minutes. A video of a first minute indicates that a real traffic police officer performs a stop gesture. A video of a second minute indicates that the real traffic police officer performs a left turn gesture. A video of a third minute indicates that the real traffic police officer performs a right turn gesture. Correspondingly, the scenario establishment module may control the virtual subject to sequentially perform the stop gesture, the left turn gesture, and the right turn gesture within the duration of 3 minutes. Correspondingly, the scenario establishment module controls, based on the first gesture executed by the real traffic police officer in the road collection data, the virtual subject in the road data to execute the first gesture. Driving the virtual subject to execute a same gesture as a real gesture is close to a gesture change rule in a real scenario, which may improve test reliability.

In a possible design, the scenario establishment module may control (or drive) the virtual subject to execute a specified gesture at specified time according to a preset rule. For example, duration of one test is 10 minutes, and the preset rule is that 10 gestures shown in Table 1 are sequentially executed, where execution duration of each gesture is 1 minute. Correspondingly, the specified gesture includes the first gesture. Driving the virtual subject to execute the gesture according to the preset rule may reduce complexity of the solution.

In a process in which the virtual subject executes the gesture, a data parsing module may obtain scenario data of the virtual traffic scenario. It may be understood that the scenario data obtained by the data parsing module includes at least related data of the virtual subject.

In a possible design, one or more sensor models are integrated into the data parsing module, for example, including but not limited to an image sensor model or a radar model. The data parsing module may obtain, based on the sensor model, perception data of the first virtual terminal on the virtual subject, for example, an image or a point cloud corresponding to the virtual subject. In this way, the scenario data obtained by the data parsing module is closer to perception data of a real vehicle in actual life.

In another possible design, the data parsing module may also directly obtain the data in the scenario database used by the scenario establishment module to establish the virtual traffic scenario, and use the data as the perception data of the first virtual terminal for the virtual subject. In this way, the scenario data describes the virtual traffic scenario more accurately.

After the data parsing module obtains the scenario data of the virtual traffic scenario, if the scenario data of the virtual traffic scenario is in a preset format, the scenario data may be directly used as the at least one piece of test data; or if the scenario data of the virtual traffic scenario is not in the preset format, the data parsing module parses the scenario data, and converts the scenario data into the at least one piece of test data in the preset format. Optionally, the preset format is a data format that meets the OSI standard. In this way, a standardized connection between the second apparatus and an autonomous driving system in a first apparatus may be implemented.

It may be understood that, in this embodiment of this application, the at least one piece of test data includes at least gesture information, the gesture information includes a first parameter, the first parameter indicates the first gesture, and the first parameter belongs to a predefined gesture parameter set. The at least one piece of test data is used to test a capability of the autonomous driving system in the first apparatus to identify and respond to the gesture.

In a possible design, the first virtual subject in the virtual traffic scenario is a virtual traffic police officer model. The gesture parameter set includes a plurality of parameters, each of the plurality of parameters indicates a corresponding traffic police officer gesture, and different parameters indicate different traffic police officer gestures.

For example, the plurality of parameters indicate any plurality of the following gestures: a stop gesture, a straight ahead gesture, a left turn gesture, a wait for left turn gesture, a right turn gesture, a wait for right turn gesture, a lane change gesture, a slow down gesture, a pull over gesture, or an unknown gesture.

It should be understood that, in different countries or regions, definitions of traffic police officer gestures may be different. Therefore, in actual application, the parameters included in the gesture parameter set may be flexibly designed based on a requirement.

In a possible design, for example, the preset standard is the OSI standard. The first parameter may be a red green blue (Red Green Blue, RGB) value, and the RGB value represents an image corresponding to the first gesture. For example, the data parsing module obtains, based on the sensor model, a two-dimensional or three-dimensional image of the virtual subject in the virtual traffic scenario in a view of the first virtual terminal, and simulates an effect of shooting an image of a traffic police officer by a vehicle in a real world based on the image sensor. Because the OSI standard supports data in an image format, the data parsing module may directly send the obtained image data (RGB value) to the first apparatus as the test data.

In a possible design, for example, the preset standard is the OSI standard. The first parameter may be a true value, and the true value indicates the first gesture. For example, Table 1 is an example of the gesture parameter set. In this example, a plurality of parameters included in the gesture parameter set are all true values.

**Table 1 Gesture parameter set**

| Parameter (true value) | Gesture (Gesture) type |
|---|---|
| 0 | gesture_unknown (unknown gesture) |
| 1 | gesture_stop (stop gesture) |
| 2 | sture_straight_ahead (straight ahead gesture) |
| 3 | gesture_left (left turn gesture) |
| 4 | gesture_left_wait (wait for left turn gesture) |
| 5 | gesture_right (right turn gesture) |
| 6 | gesture_right_wait (wait for right turn gesture) |
| 7 | gesture_lane_change (lane change gesture) |
| 8 | gesture_slow_down (slow down gesture) |
| 9 | gesture_pull_over (pull over gesture) |
| ... | ... |

It should be understood that Table 1 is merely an example rather than a specific limitation. In actual application, a type of the true value and a gesture type corresponding to each true value may be flexibly set based on a requirement.

Certainly, in addition to the RGB value and the true value, the first parameter may also be in another data format, which is specifically determined by a data format supported by the first apparatus.

S102: The second apparatus outputs the at least one piece of test data to the first apparatus, and correspondingly, the first apparatus receives the at least one piece of test data.

Specifically, the data parsing module sends the at least one piece of test data to the first apparatus.

S 103: The first apparatus generates a first control signal based on the at least one piece of test data.

Specifically, a processing module in the first apparatus identifies, based on the at least one piece of test data, an event that occurs in the virtual traffic scenario, and then generates the first control signal based on the event, where the first control signal is used to control the first virtual terminal, so that a first terminal responds to the event.

In a possible implementation, the processing module in the first apparatus identifies, based on the gesture information (for example, the first parameter) included in the at least one piece of test data, a gesture (for example, the first gesture) executed by the virtual subject in the virtual traffic scenario, and then generates the first control signal based on the first gesture.

During specific implementation, the processing module may integrate one or more of the following functions: perception (for example, perceiving, based on the test data, for example, the first gesture, an event that has occurred in the virtual traffic scenario), predicting (for example, predicting, based on a sensing result, an event that is to occur in the future in the virtual traffic scenario), planning (for example, planning a driving track of the first virtual terminal based on a sensing result and/or a prediction result), controlling (for example, generating a control signal used to control a driving track of the first virtual terminal), or the like.

For example, refer to FIG. 2. The first gesture executed by the virtual subject at a crossroad is the left turn gesture, and the processing module in the first apparatus generates a first control signal that is used to control the first virtual terminal to turn to the left to drive.

S104: The first apparatus outputs the first control signal to the second apparatus, and correspondingly, the second apparatus receives the first control signal.

S 105: The second apparatus controls the first virtual terminal based on the first control signal.

For example, the event that occurs in the virtual traffic scenario is the left turn gesture and the first control signal is used to control the first virtual terminal to turn to the left. A vehicle dynamic model obtains a dynamic response value (for example, a driving speed or a direction that are required for implementing left turn of the first virtual terminal) of the first virtual terminal for the virtual traffic scenario based on the first control signal (a left turn signal) sent by the first apparatus and current pose information (for example, a lane in which the first virtual terminal is located, or a distance between the first virtual terminal and an intersection) of the first virtual terminal, so as to update the pose information of the first virtual terminal based on the dynamic response value (for example, controlling the first virtual terminal to turn to the left to drive).

It may be understood that, after controlling the first virtual terminal, the second apparatus may determine, by detecting a status of the first virtual terminal, the capability of the autonomous driving system to identify and respond to the first gesture. For example, after the vehicle dynamic model updates the pose information of the first virtual terminal, the second apparatus determines the updated pose information of the first virtual terminal to determine whether the autonomous driving system accurately identifies and responds to the first gesture, so as to determine the capability of the autonomous driving system in the first apparatus to identify and respond to the gesture.

It may be understood that the first gesture is used as an example above. In an actual test process, the gesture may be constantly changed to test the autonomous driving system for a plurality of times. In the test process, an algorithm of the autonomous driving system may be further continuously adjusted based on the test result, to improve the capability of the autonomous driving system to identify and respond to the gesture.

According to S101 to S105, the second apparatus may generate the test data, and perform, based on the test data, a closed-loop test on the capability of the autonomous driving system to identify and respond to the traffic police officer gesture, thereby improving safety and intelligence of autonomous driving of the vehicle.

It may be understood that, in the actual life, the gesture executed by the traffic police officer may be targeted (or directional). For example, generally, the gesture executed by the traffic police officer indicates a vehicle driving toward a direction facing the traffic police officer. In other words, the gesture executed by the traffic police officer is a valid gesture for a vehicle facing the traffic police officer, and is an invalid gesture for a vehicle back to the traffic police officer. Therefore, in this embodiment of this application, a data transmission module may send the at least one piece of test data to the first apparatus when the first gesture is valid for the first virtual terminal (for example, the virtual subject is face to face with the first virtual terminal); and/or the processing module in the first apparatus outputs the first control signal to the first apparatus when determining that the first gesture is valid for the first virtual terminal (for example, the virtual subject is face to face with the first virtual terminal). Certainly, in addition to a relative location between the virtual subject and the first virtual terminal, a determining condition for determining that the first gesture is valid for the first virtual terminal may further include another determining condition. This is not limited in this application.

In a possible design, the foregoing gesture information may further include a second parameter, where the second parameter indicates information about a lane in which the first virtual terminal is located. The information about the lane in which the first virtual terminal is located, for example, includes an identifier (assigned_lane_id) of the lane in which the first virtual terminal is located. In other words, the information about the lane in which the first virtual terminal is located may be provided as a part of the gesture information for the autonomous driving system, so that the autonomous driving system may identify and respond to the first gesture with reference to the information about the lane in which the first virtual terminal is located, thereby improving the reliability of the solution.

In a possible design, the gesture information may further include a third parameter, and the third parameter indicates whether the first parameter (is_out_of_service) is valid. Correspondingly, when the third parameter indicates that the first parameter is valid, the first apparatus may generate the first control signal based on the first gesture.

Optionally, if the third parameter indicates that the first parameter is invalid, and the at least one piece of test data further includes other information other than the gesture information, the first apparatus may output a control signal based on the other information.

In this way, whether the gesture information is valid may be set, and whether to test the capability of the autonomous driving system to identify and respond to a gesture may be flexibly determined based on a requirement, so that computing resources of the first apparatus may be saved.

In a possible design, the foregoing at least one piece of test data further includes one or more pieces of the following information:
(1) subject identification information of the first gesture, that is, identification information of a subject that executes the first gesture, for example, identification information of the virtual subject shown in FIG. 2;
(2) subject location information (police_base) of the first gesture, that is, location information of a subject that executes the first gesture, for example, location information of the virtual subject shown in FIG. 2, where the location information may be longitude and latitude, coordinates, or the like, which is not limited in this application;
(3) subject reference information (model reference) of the first gesture, that is, source information of a subject that executes the first gesture, for example, source information of the virtual subject shown in FIG. 2, where the subject reference information may optionally be a link used to indicate a file address for storing three-dimensional model data of the virtual subject; or
(4) subject drive information (source reference) of the first gesture, that is, information used to drive the virtual subject to execute the first gesture, where for example, when the first gesture is driven by the first event, the subject driving information of the first gesture may be the first event; when the first gesture is driven by the road collection data, the subject driving information of the first gesture may be the road collection data; or when the first gesture is driven by the preset rule, the subject driving information of the first gesture may be the preset rule.

In this way, the second apparatus may provide, for the first apparatus, information related to an execution subject corresponding to the first gesture, so that the first apparatus may identify more information related to the first gesture, thereby further improving the reliability of the test solution.

In the actual life, in addition to the gesture information, the vehicle may also perceive other information used to indicate a traffic rule, for example, traffic signal light information or road sign information. In view of this, in a possible design, the at least one piece of test data may further include the traffic signal light information, the road sign information, or the like. The information may match the gesture information, or may be in contradiction with the gesture information. This is not limited in this application.

If the traffic signal light information, the road sign information, or the like matches the gesture information (for example, the gesture information indicates the left turn gesture, and the traffic signal light indicates that traffic may turn to the left or a road on which the first virtual terminal is located has a left turn identifier), and the third parameter indicates that the first parameter is valid, the first apparatus may output the first control signal based on any one of the foregoing information.

If the traffic signal light information, the road sign information, or the like is in contradiction with the first gesture (for example, the first gesture is the left turn gesture, and the traffic signal light indicates that the traffic may go straight ahead or the road on which the first virtual terminal is located has only a straight ahead identifier), and the third parameter indicates that the first parameter is valid, the first apparatus may output the first control signal based on priority information of the foregoing information.

For example, if the at least one piece of test data includes the gesture information and the traffic signal light information, the first apparatus outputs the first control signal based on information with a higher priority in the traffic signal light information and the gesture information.

Correspondingly, when a priority of the gesture information is higher than a priority of the traffic signal light information, the first apparatus generates the first control signal based on the first gesture. For example, if the priority of a traffic signal light is lower than the priority of the gesture information, the traffic signal light information indicates going straight ahead, and the gesture information indicates turning to the left, the first control signal output by the first apparatus is used to control the first virtual terminal to turn to the left.

Conversely, if the priority of the gesture information is lower than the priority of the traffic signal light information, the first apparatus generates the first control signal based on the traffic signal light information. For example, if the priority of the traffic signal light is higher than the priority of the gesture information, the traffic signal light information indicates going straight ahead, and the gesture information indicates turning to the left, the first control signal output by the first apparatus is used to control the first virtual terminal to go straight ahead.

Optionally, priorities of various types of information in the at least one piece of test data may be determined according to a local traffic regulation.

In this way, the second apparatus may support contradiction configuration between the gesture information and other information, and may test a capability of the autonomous driving system to process contradiction information, thereby improving robustness of the autonomous driving system.

It is considered that in the actual life, there is another traffic participant around the vehicle, for example, another vehicle, a pedestrian, or a building, which affects perception of the traffic police officer gesture by the vehicle. In a possible design, the at least one piece of test data may further include interference information.

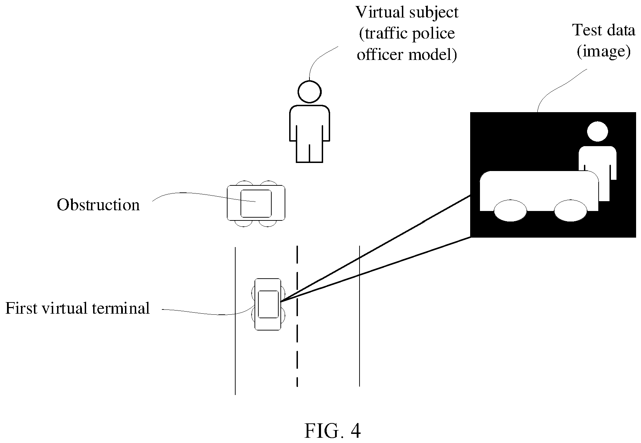

For example, the interference information includes obstruction information. The obstruction information is information about an object (that is, an obstruction) that blocks a line of sight of the first virtual terminal when the first virtual terminal perceives the virtual subject, and includes but is not limited to a shape, a color, a contour, a spatial location, or the like of the obstruction. It should be understood that, in a blocking scenario, the gesture information may be partially missing. For example, the test data is an image. Refer to FIG. 4. In an image received by the first apparatus, a part of the virtual subject is blocked by another vehicle. Consequently, the gesture information of the virtual subject is incomplete.

Certainly, the interference information is not limited to the information about the obstruction, and may also be other information. For example, if the test data is the image, the second apparatus may further simulate, by reducing parameters such as brightness and resolution of the image, interference caused by hardware performance of an image sensor in the actual life.

In this way, the second apparatus may support configuration of the interference information, and may test a capability of the autonomous driving system to process the interference information, thereby improving the robustness of the autonomous driving system.

In a possible design, the at least one piece of test data further includes perception data from a second virtual terminal, the perception data includes reference gesture information, and the reference gesture information indicates the first gesture. A relative location between the second virtual terminal and the virtual subject is different from the relative location between the first virtual terminal and the virtual subject.

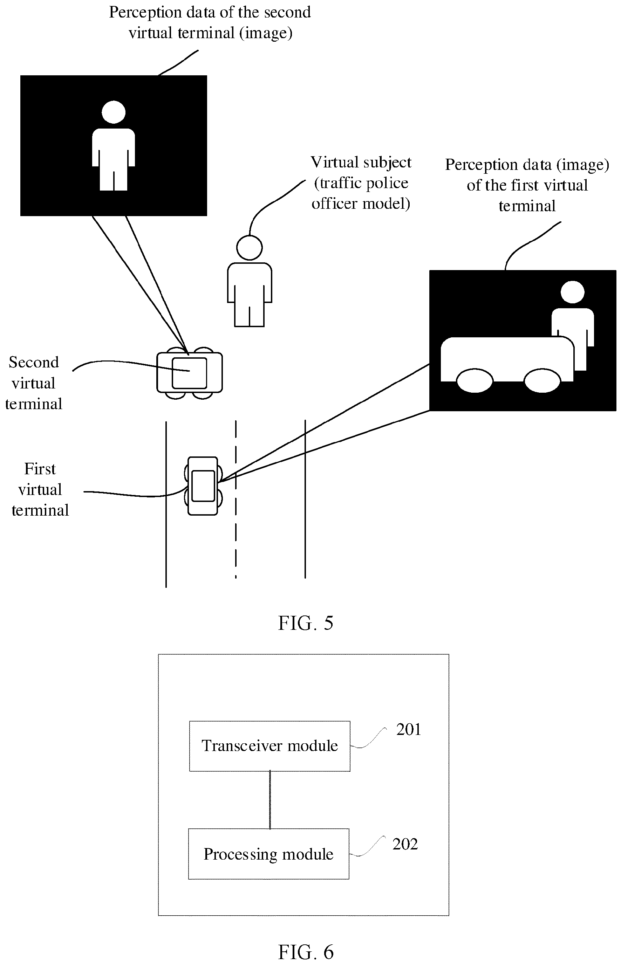

For example, the test data and the perception data are both images. Refer to FIG. 5. An image of the virtual subject in the view of the first virtual terminal is different from an image of the virtual subject in the view of the second virtual terminal. Because the line of sight of the first virtual terminal is blocked by the second virtual terminal, only a part of the image of the virtual subject exists. The line of sight of the first virtual terminal is not blocked by any object. Therefore, a complete image of the virtual subject may be obtained.

Correspondingly, the first apparatus may identify, with reference to both the image of the virtual subject in the view of the first virtual terminal and the image of the virtual subject in the view of the second virtual terminal, the gesture executed by the virtual subject.

Certainly, in addition to the perception data from the second virtual terminal, the at least one piece of test data may further include data from another device, for example, image data collected by a camera on a roadside. This is not limited in this application.

In this way, the second apparatus may provide the first apparatus with the gesture information of the virtual subject in different views, so as to test a capability of the autonomous driving system to identify a gesture based on a vehicle to everything (Vehicle to Everything, V2X) communication function.

It may be understood that the foregoing implementations may be separately implemented, or may be implemented in combination with each other. This is not limited in this application.

The foregoing describes the method provided in embodiments of this application with reference to the accompanying drawings, and the following describes an apparatus provided in embodiments of this application with reference to the accompanying drawings.

Based on a same technical concept, embodiments of this application provide an information exchange apparatus. The apparatus includes a module/unit/means configured to perform the method performed by the second apparatus and/or the first apparatus in the foregoing method embodiments. The module/unit/mean may be implemented by software, or may be implemented by hardware, or may be implemented by hardware executing corresponding software.

For example, refer to FIG. 6. The apparatus may include a transceiver module 201 and a processing module 202. The apparatus is configured to implement a function of the second apparatus or the first apparatus.

For example, when the apparatus is used as the first apparatus, the transceiver module 201 is configured to receive at least one piece of test data, where the at least one piece of test data includes gesture information, the gesture information includes a first parameter, the first parameter indicates a first gesture, and the first parameter belongs to a predefined gesture parameter set. The processing module 202 is configured to generate a first control signal based on the at least one piece of test data, where the first control signal is used to control a first virtual terminal. The transceiver module 201 is further configured to output the first control signal.

Optionally, the gesture parameter set includes a plurality of parameters, and the plurality of parameters indicate any plurality of the following gestures: a stop gesture, a straight ahead gesture, a left turn gesture, a wait for left turn gesture, a right turn gesture, a wait for right turn gesture, a lane change gesture, a slow down gesture, a pull over gesture, or an unknown gesture.

Optionally, the first parameter is an RGB value, and the RGB value represents an image corresponding to the first gesture; or the first parameter is a true value, and the true value indicates the first gesture.

Optionally, the gesture information further includes a second parameter, where the second parameter indicates information about a lane in which a first virtual terminal is located; and/or a third parameter, where the third parameter indicates whether the first parameter is valid.

Optionally, the at least one piece of test data further includes one or more pieces of the following information:
subject identification information of the first gesture;
subject location information of the first gesture;
subject reference information of the first gesture; or
subject drive information of the first gesture.

Optionally, the at least one piece of test data further includes at least one piece of the following information:
traffic signal light information; or
obstruction information.

Optionally, the at least one piece of test data further includes perception data from a second virtual terminal, the perception data includes reference gesture information, and the reference gesture information indicates the first gesture.

Optionally, the at least one piece of test data includes the gesture information and the traffic signal light information. The processing module 202 is configured to generate the first control signal based on information with a higher priority in priority information of the traffic signal light information and priority information of the gesture information.

For example, when the apparatus is used as the second apparatus, the transceiver module is configured to output the at least one piece of test data to the first apparatus, where the at least one piece of test data includes the gesture information, the gesture information includes the first parameter, the first parameter indicates the first gesture, and the first parameter belongs to the predefined gesture parameter set. The transceiver module 201 is further configured to receive a first control signal from the first apparatus. The processing module 202 is configured to control a first virtual terminal based on the first control signal.

Optionally, the gesture parameter set includes the plurality of parameters, and the plurality of parameters indicate any plurality of the following gestures:
the stop gesture, the straight ahead gesture, the left turn gesture, the wait for left turn gesture, the right turn gesture, the wait for right turn gesture, the lane change gesture, the slow down gesture, the pull over gesture, or the unknown gesture.

Optionally, the first parameter is an RGB value, and the RGB value represents an image corresponding to the first gesture; or the first parameter is a true value, and the true value indicates the first gesture.

Optionally, the gesture information further includes a second parameter, where the second parameter indicates information about a lane in which a first virtual terminal is located; and/or a third parameter, where the third parameter indicates whether the first parameter is valid.

Optionally, the at least one piece of test data further includes one or more pieces of the following information:
subject identification information of the first gesture;
subject location information of the first gesture;
subject reference information of the first gesture; or
subject drive information of the first gesture.

Optionally, the at least one piece of test data further includes at least one piece of the following information:
traffic signal light information; or
obstruction information.

Optionally, the at least one piece of test data further includes perception data from a second virtual terminal, the perception data includes reference gesture information, and the reference gesture information indicates the first gesture.

Optionally, the processing module 202 is further configured to: when a first event is detected, control a virtual subject to execute the first gesture, or control, based on road collection data, the virtual subject to execute a gesture the same as a gesture in the road collection data, where the road collection data indicates that a real subject executes the first gesture in a real road scenario; or control the virtual subject to execute a specified gesture at specified time, where the specified gesture includes the first gesture.

Optionally, the first event includes one or more of the following: an event in which a distance between the virtual subject and the first virtual terminal is less than a preset distance, traffic congestion, or a traffic accident.

It should be understood that all related content of the steps in the foregoing method embodiments may be cited in function descriptions of the corresponding functional modules. Details are not described herein again.

During specific implementation, the apparatus may have a plurality of product forms. The following describes several possible product forms.

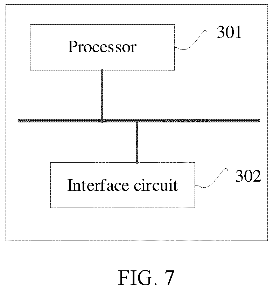

Refer to FIG. 7. An embodiment of this application further provides an information exchange apparatus. The apparatus includes at least one processor 301 and an interface circuit 302. The interface circuit 302 is configured to receive a signal from another apparatus other than the apparatus and transmit the signal to the processor 301, or send a signal from the processor 301 to another communication apparatus other than the apparatus. The processor 301 is configured to implement, by using a logic circuit or executing a code instruction, the method performed by a second apparatus or a first apparatus.

It should be understood that the processor mentioned in embodiments of this application may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By example but not by limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is the general-purpose processor, the DSP, the ASIC, the FPGA or another programmable logic device, the discrete gate or the transistor logic device, or the discrete hardware component, the memory (storage module) may be integrated into the processor.

It should be noted that the memory described in this specification aims to include but is not limited to these memories and any memory of another proper type.

On the basis of a same technical concept, an embodiment of this application further provides a computer-readable storage medium, including a program or instructions. When the program or the instructions are run on a computer, the method performed by the second apparatus or the first apparatus is performed.

On the basis of a same technical concept, an embodiment of this application further provides a computer program product including instructions. The computer program product stores the instructions, and when the instructions are run on a computer, the method performed by the second apparatus or the first apparatus is performed.

On the basis of a same technical concept, an embodiment of this application further provides a vehicle, including the apparatus shown in FIG. 6 or FIG. 7.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to flowcharts and/or block diagrams of the method, a device (system), and a computer program product in this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may be stored in a computer-readable memory that may instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing one or more specific functions in one or more procedures in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of protection defined by the following claims and their equivalent technologies.

## Claims

1. An information exchange method, wherein the method comprises:
receiving at least one piece of test data, wherein the at least one piece of test data comprises gesture information, the gesture information comprises a first parameter, the first parameter indicates a first gesture, and the first parameter belongs to a predefined gesture parameter set; and
outputting a first control signal based on the at least one piece of test data, wherein the first control signal is used to control a first virtual terminal.

2. The method according to claim 1, wherein the gesture parameter set comprises a plurality of parameters, and the plurality of parameters indicate any plurality of the following gestures:
a stop gesture, a straight ahead gesture, a left turn gesture, a wait for left turn gesture, a right turn gesture, a wait for right turn gesture, a lane change gesture, a slow down gesture, a pull over gesture, or an unknown gesture.

3. The method according to claim 1 or 2, wherein the first parameter is an RGB value, and the RGB value represents an image corresponding to the first gesture; or
the first parameter is a true value, and the true value indicates the first gesture.

4. The method according to any one of claims 1 to 3, wherein the gesture information further comprises:
a second parameter, wherein the second parameter indicates information about a lane in which the first virtual terminal is located; and/or
a third parameter, wherein the third parameter indicates whether the first parameter is valid.

5. The method according to any one of claims 1 to 4, wherein the at least one piece of test data further comprises one or more pieces of the following information:
subject identification information of the first gesture;
subject location information of the first gesture;
subject reference information of the first gesture; or
subject drive information of the first gesture.

6. The method according to any one of claims 1 to 5, wherein the at least one piece of test data further comprises at least one piece of the following information:
traffic signal light information; or
obstruction information.

7. The method according to any one of claims 1 to 6, wherein the at least one piece of test data further comprises perception data from a second virtual terminal, the perception data comprises reference gesture information, and the reference gesture information indicates the first gesture.

8. The method according to claim 6, wherein the at least one piece of test data comprises the gesture information and the traffic signal light information; and
the outputting a first control signal based on the at least one piece of test data comprises:
outputting the first control signal based on information with a higher priority in the traffic signal light information and the gesture information.

9. An information exchange method, wherein the method comprises:
outputting at least one piece of test data to a first apparatus, wherein the at least one piece of test data comprises gesture information, the gesture information comprises a first parameter, the first parameter indicates a first gesture, and the first parameter belongs to a predefined gesture parameter set; and
receiving a first control signal from the first apparatus; and controlling a first virtual terminal based on the first control signal.

10. The method according to claim 9, wherein the gesture parameter set comprises a plurality of parameters, and the plurality of parameters indicate any plurality of the following gestures:
a stop gesture, a straight ahead gesture, a left turn gesture, a wait for left turn gesture, a right turn gesture, a wait for right turn gesture, a lane change gesture, a slow down gesture, a pull over gesture, or an unknown gesture.

11. The method according to claim 9 or 10, wherein the first parameter is an RGB value, and the RGB value represents an image corresponding to the first gesture; or
the first parameter is a true value, and the true value indicates the first gesture.

12. The method according to any one of claims 9 to 11, wherein the gesture information further comprises:
a second parameter, wherein the second parameter indicates information about a lane in which the first virtual terminal is located; and/or
a third parameter, wherein the third parameter indicates whether the first parameter is valid.

13. The method according to any one of claims 9 to 12, wherein the at least one piece of test data further comprises one or more pieces of the following information:
subject identification information of the first gesture;
subject location information of the first gesture;
subject reference information of the first gesture; or
subject drive information of the first gesture.

14. The method according to any one of claims 9 to 13, wherein the at least one piece of test data further comprises at least one piece of the following information:
traffic signal light information; or
obstruction information.

15. The method according to any one of claims 9 to 14, wherein the at least one piece of test data further comprises perception data from a second virtual terminal, the perception data comprises reference gesture information, and the reference gesture information indicates the first gesture.

16. The method according to any one of claims 9 to 15, wherein the method further comprises:
when a first event is detected, controlling a virtual subject to execute the first gesture, wherein the first event comprises one or more of the following: an event in which a distance between the virtual subject and the first virtual terminal is less than a preset distance, traffic congestion, or a traffic accident; or
controlling, based on road collection data, the virtual subject to execute a gesture the same as a gesture in the road collection data, wherein the road collection data indicates that a real subject executes the first gesture in a real road scenario; or
controlling the virtual subject to execute a specified gesture at specified time, wherein the specified gesture comprises the first gesture.

17. An information exchange apparatus, wherein the apparatus comprises:
a transceiver module, configured to receive at least one piece of test data, wherein the at least one piece of test data comprises gesture information, the gesture information comprises a first parameter, the first parameter indicates a first gesture, and the first parameter belongs to a predefined gesture parameter set; and
a processing module, configured to generate a first control signal based on the at least one piece of test data, wherein the first control signal is used to control a first virtual terminal, wherein
the transceiver module is further configured to output the first control signal.

18. An information exchange apparatus, wherein the apparatus comprises:
a transceiver module, configured to output at least one piece of test data to a first apparatus, wherein the at least one piece of test data comprises gesture information, the gesture information comprises a first parameter, the first parameter indicates a first gesture, and the first parameter belongs to a predefined gesture parameter set, wherein
the transceiver module is further configured to receive a first control signal from the first apparatus; and
a processing module, configured to control the first virtual terminal based on the first control signal.

19. An information exchange apparatus, wherein the information exchange apparatus comprises a processor and an interface circuit, the interface circuit is configured to receive a signal from another apparatus other than the apparatus and transmit the signal to the processor, or send a signal from the processor to another communication apparatus other than the apparatus, and the processor is configured to implement the method according to any one of claims 1 to 8 by using a logic circuit or executing code instructions.

20. An information exchange apparatus, wherein the information exchange apparatus comprises a processor and an interface circuit, the interface circuit is configured to receive a signal from another apparatus other than the apparatus and transmit the signal to the processor, or send a signal from the processor to another communication apparatus other than the apparatus, and the processor is configured to implement the method according to any one of claims 9 to 16 by using a logic circuit or executing code instructions.

21. A computer-readable storage medium, comprising a program or instructions, wherein when the program or instructions are run on a computer, the method according to any one of claims 1 to 8 is performed.

22. A computer-readable storage medium, comprising a program or instructions, wherein when the program or instructions are run on a computer, the method according to any one of claims 9 to 16 is performed.

23. An information exchange system, comprising the apparatus according to claim 17 and the apparatus according to claim 18; or comprising the apparatus according to claim 19 and the apparatus according to claim 20.

24. A vehicle, comprising the apparatus according to claim 17 or the apparatus according to claim 19 or the computer-readable storage medium according to claim 21.
